**Europäisches Patentamt**

**European Patent Office**

**Office européen des brevets**

(19)

(11) Veröffentlichungsnummer: **0 193 190 B1**

(12) **EUROPÄISCHE PATENTSCHRIFT**

(45) Veröffentlichungstag der Patentschrift: **22.05.91**

(51) Int. Cl.⁵: **H04J 15/00, H04B 10/00**

(21) Anmeldenummer: **86102528.6**

(22) Anmeldetag: **27.02.86**

(54) Optisches Nachrichtenübertragungssystem im Teilnehmeranschlussbereich.

(30) Priorität: **28.02.85 DE 3507064**

(43) Veröffentlichungstag der Anmeldung:
**03.09.86 Patentblatt 86/36**

(45) Bekanntmachung des Hinweises auf die
Patenterteilung:
**22.05.91 Patentblatt 91/21**

(84) Benannte Vertragsstaaten:
**AT BE CH DE FR GB IT LI LU NL SE**

(56) Entgegenhaltungen:
DE-A- 3 104 404
US-A- 3 874 780
US-A- 4 161 651

NTG-FACHBERICHTE, Band 73, 1980, THE IN-
TERNATIONAL SYMPOSIUM ON SUBSCRIBER
LOOPS AND SERVICES, München, 15. - 19.
September 1980, Seiten 51-55, VDE-Verlag
GmbH, Berlin, DE; S. SENMOTO et al.: "A
fiber optics application to subscriber loops"

PROCEEDINGS OF THE IEEE INTERNATIONAL
CONFERENCE ON COMMUNICATIONS, Amsterdam, 14. - 17. Mai 1984, Band 2, IEEE; F.
SPORLEDER: "Fiber optics in the subscriber
loop plant"

PROCEEDINGS OF THE IEEE, Band 58, Nr. 10,
Oktober 1980, Seiten 1291-1295, IEEE, New
York, US; K.Y. CHANG: "Fiberguide systems
in the subscriber loop"

NACHRICHTEN ELEKTRONIK, Band 33, Nr. 1,
Januar 1979, Seite 18, Heidelberg, DE;
"Glasfaser-Richtungskoppler"

(73) Patentinhaber: **Standard Elektrik Lorenz Aktiengesellschaft**
**Lorenzstrasse 10**
**W-7000 Stuttgart 40(DE)**

(72) Erfinder: **Ali, Amar, Dr.**
**Belaustrasse 8**
**W-7000 Stuttgart 1(DE)**
Erfinder: **Ohnsorge, Horst, Dr.**
**Zeller Strasse 4**
**W-7141 Freiberg(DE)**

(74) Vertreter: **Kugler, Hermann, Dipl.-Phys. et al**
**Standard Elektrik Lorenz AG Patent- und Lizenzwesen Postfach 30 09 29**
**W-7000 Stuttgart 30(DE)**

**Beschreibung**

Die Erfindung betrifft ein optisches Nachrichtenübertragungssystem nach dem Oberbegriff des Patentanspruchs 1.

Aus der DE-A-31 04 404 ist ein System bekannt, das hinsichtlich der Nachrichtenübertragung in Richtung zu den Teilnehmern die im Oberbegriff angeführten Merkmale aufweist. Dort ist allerdings das Wellenlängenmultiplexverfahren als gegenüber dem Zeitmultiplexverfahren vorzuziehendes Verfahren dargestellt. Es sind keine Angaben darüber gemacht, wie die für eine Nachrichtenübertragung in der Gegenrichtung erforderlichen Rückkanäle eingerichtet werden können.

Aus der DE-A 32 20 817 ist ein optisches Nachrichtenübertragungssystem bekannt, bei dem eine Gruppe von Teilnehmern über individuelle Lichtwellenleiter mit einer diesen Teilnehmern gemeinsamen Vorfeldeinrichtung verbunden ist, die über einen einzigen Lichtwellenleiter an eine Zentrale angeschlossen ist.

Bei diesem System werden aber keine teilnehmerindividuellen Signale übertragen, und es gibt auch keine Übertragung in zwei Richtungen. Es wird ein Gemisch aus mehreren Signalen (Fernsehsignalen) von der Zentrale zur Vorfeldeinrichtung übertragen, dort mit optischen Mitteln so verteilt, daß jeder der an die Vorfeldeinrichtung angeschlossenen Teilnehmer dasselbe Gemisch von Signalen empfängt. Eine Signalübertragung in Rückwärtsrichtung findet nicht statt.

Es ist die Aufgabe der Erfindung, ein kostengünstiges Nachrichtenübertragungssystem für den Teilnehmeranschlußbereich anzugeben, mit dem die doppeltgerichtete Übertragung teilnehmerindividueller Nachrichten möglich ist.

Die Aufgabe wird wie im Patentanspruch 1 angegeben gelöst. Weiterbildungen ergeben sich aus den Unteransprüchen.

Die Erfindung wird nun anhand der Zeichnungen beispielsweise näher erläutert. Es zeigen:

Fig. 1    ein erstes Ausführungsbeispiel, bei dem zur Aus-/Einkopplung der Signal aus dem/in den gemeinsamen Lichtwellenleiter mehrere optische Koppler verwendet sind, die jeweils zu einem Teilnehmer gehören, und

Fig. 2    ein zweites Ausführungsbeispiel, bei dem zur Aus-/Einkopplung der Signale aus dem/in den gemeinsamen Lichtwellenleiter ein einziger Sternkoppler verwendet ist.

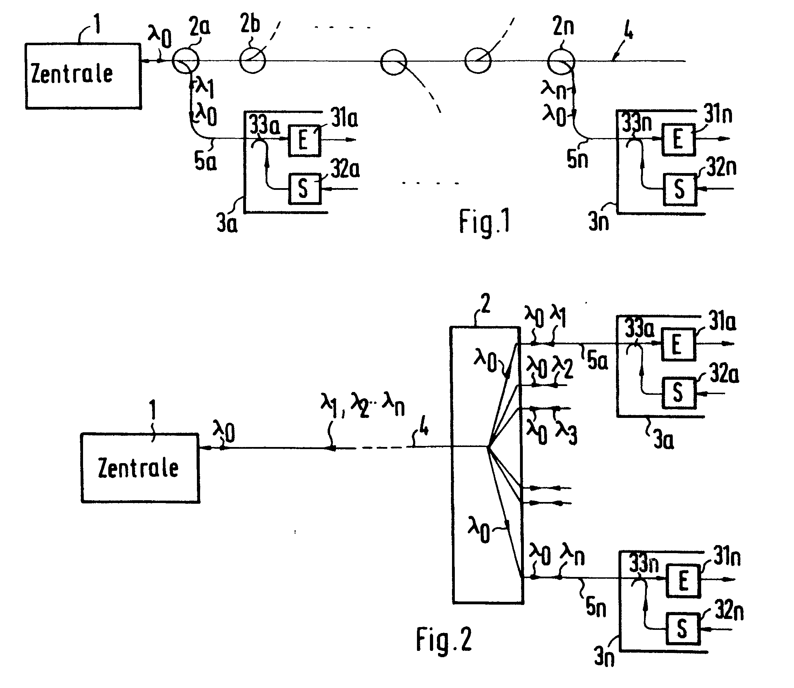

Das System nach Fig. 1 besteht aus einer Zentrale 1 und einer Gruppe von Teilnehmern 3a bis 3n, die über noch zu beschreibende Lichtwellenleiter-Verbindungen an die Zentrale 1 angeschlossen sind.

In der folgenden Erläuterung der Ausführungsbeispiele wird die von der Zentrale zu den Teilnehmern hinführende Übertragungsrichtung als Abwärtsrichtung und die von den Teilnehmern zur Zentrale hinführende Übertragungsrichtung als Aufwärtsrichtung bezeichnet.

Zur Nachrichtensignalübertragung in Abwärtsrichtung werden die für eine Gruppe von Teilnehmern 3a bis 3n bestimmten teilnehmerindividuellen Signale in der Zentrale 1 mit einem elektrischen Multiplexer zu einem Zeitmultiplexsignal zusammengefaßt, das z.B. eine Bitfolgefrequenz von 1,12 Gbit/s hat. Ein ebenfalls nicht gezeigter optischer Sender mit einer Wellenlänge $\lambda_0$ setzt dieses Zeitmultiplexsignal in ein optisches Signal um, das über einen der Gruppe von Teilnehmern 3a bis 3n gemeinsamen Lichtwellenleiter 4 in die Nähe dieser Teilnehmer übertragen wird. Beispielsweise verläuft dieser Lichtwellenleiter 4 entlang einer Straße, an der die Teilnehmer 3a bis 3n liegen.

In der Nähe jedes Teilnehmers 3a bis 3n ist in den Lichtwellenleiter 4 ein passiver optischer Koppler 2a bis 2n eingefügt, der das in Abwärtsrichtung gesendete optische Signal mit der Wellenlänge $\lambda_0$ aus dem der Gruppe gemeinsamen Lichtwellenleiter 4 auf jeweils teilnehmerindividuelle zu den einzelnen Teilnehmern gehörende Lichtwellenleiter 5a bis 5n abzweigt. Auf diese Weise erhalten alle über einen solchen Koppler an den Lichtwellenleiter 4 angeschlossenen Teilnehmer 3a bis 3n dasselbe optische Signal, d.h. in Abwärtsrichtung findet eine Verteilung des optischen Signals auf die Teilnehmer statt.

Bei jedem der Teilnehmer 3a bis 3n gelangt das optische Empfangssignal auf einen optischen Empfänger 31a bis 31n, der es wieder in das elektrische Zeitmultiplexsignal umsetzt. Dieses elektrische Zeitmultiplexsignal gelangt dann auf einen Demultiplexer, der so eingerichtet ist, daß dieser Teilnehmer nur das für ihn bestimmte teilnehmerindividuelle Signal aus dem Zeitmultiplexsignal entnehmen kann und ein Zugriff auf die für andere Teilnehmer bestimmten teilnehmerindividuellen Signale ausgeschlossen ist.

Hierfür gibt es zwei verschiedene Möglichkeiten: Die bei den Teilnehmern 3a bis 3n vorhandenen Demultiplexer können einheitlich aufgebaut sein und das empfangene Zeitmultiplexsignal in die darin enthaltenen teilnehmer individuellen Signale auflösen, so daß diese an verschiedenen Ausgängen des Demultiplexers erscheinen. Die bei einem Teilnehmer vorhandene Endeinrichtung (oder mehrere Endeinrichtungen) ist nur mit dem einem Demultiplexer-Ausgang fest verbunden, an dem das für den Teilnehmer bestimmte teilnehmerindividuelle Signal erscheint, und ein Anschluß an die übrigen Ausgänge ist ausgeschlossen.

Die andere Möglichkeit besteht darin, daß die bei den Teilnehmern vorhandenen Demultiplexer teilnehmerindividuelle Demultiplexer sind, die so eingerichtet sind, daß sie dem Multiplexsignal nur das für einen jeweiligen Teilnehmer bestimmte Signal entnehmen und überhaupt keine Ausgänge haben, an denen andere Signale erscheinen.

Ein teilnehmerindividuelles Signal der bisher bezeichneten Art kann wiederum ein Zeitmultiplexsignal sein, das aus verschiedenen Signalen zusammengesetzt sind, entweder zur Abwicklung verschiedener Telekommunicationsdienste desselben Teilnehmers, d.h. zur Versorgung verschiedener Endgeräte desselben Teilnehmers, oder zur Versorgung verschiedener Mitglieder einer Teilnehmergemeinschaft, die beispielsweise in einem Mehrfamilienhaus ihre Wohn- und/oder Geschäftsräume haben. In diesen Fällen wäre dann mindestens ein weiterer elektrischer Demultiplexer zur Zeitmultiplex-Auflösung des teilnehmerindividuellen Zeitmultiplex-Signals notwendig.

Im ersteren Falle wäre der optische Empfänger (z.B. 31a) und der nachgeschaltete erste Demultiplexer an einem Übergabepunkt z.B. im Keller eines Einfamilienhauses installiert, wogegen im zweiten Falle diese Einrichtungen beispielsweise an einem im Keller eines Mehrfamilienhauses befindlichen, einer Teilnehmergemeinschaft gemeinsamen Übergabepunkt installiert wären. Terminologisch wäre dann ein Teilnehmer im oben eingeführten Sinne eine Teilnehmergemeinschaft, die gemeinsam einen ihr individuell zugeteilten Zeitmultiplexkanal nützt.

In Aufwärtsrichtung geschieht die Übertragung der teilnehmerindividuellen Signale wie folgt: bei jedem der Teilnehmer 3a bis 3n (die auch eine Teilnehmergemeinschaft sein können) befindet sich ein optischer Sender 32a bis 32n mit einer teilnehmerindividuellen Wellenlänge $\lambda_1$ bis $\lambda_n$, der das von diesem Teilnehmer (oder dieser Teilnehmergemeinschaft) zu sendende elektrische Signal in ein optisches Signal mit seiner teilnehmerindividuellen Wellenlänge umsetzt.

Das elektrische Eingangssignal des Senders kann ein Zeitmultiplexsignal sein, das aus Sendesignalen verschiedener Endgeräte eines einzigen Teilnehmers oder verschiedener eine Teilnehmergemeinschaft bildenden Teilnehmer zusammengesetzt ist.

Vorzugsweise wird das von einem Teilnehmer gesendete optische Signal mittels eines Richtungskopplers 33a bis 33n in denselben teilnehmerindividuellen Lichtwellenleiter 5a bis 5n eingekoppelt, auf dem das optische Signal mit der Wellenlänge $\lambda_0$ vom gemeinsamen Wellenleiter 4 zu den Teilnehmern gesendet wird. Jedes in Aufwärtsrichtung gesendete Signal eines Teilnehmers gelangt somit über den teilnehmerindividuellen Lichtwellenleiter zu dem zum Teilnehmer gehörenden optischen Koppler 2a bis 2n und wird dort in den der Gruppe von Teilnehmern 3a bis 3n gemeinsamen Lichtwellenleiter 4 eingekoppelt und über diesen zur Zentrale 1 übertragen.

Die Gesamtheit der in den Lichtwellenleiter 4 eingefügten Koppler 2a bis 2n bildet also in Aufwärtsrichtung ein aus den teilnehmerindividuellen Signalen zusammengesetztes Wellenlängenmultiplex-Signal, das zur Zentrale gesendet wird.

Die Koppler 2a bis 2n sind jeweils Richtungskoppler, die verhindern, daß ein in Aufwärtsrichtung zu sendendes Signal auch in Abwärtsrichtung weitergesendet wird. Die Koppler sind entweder Faserkoppler (Fig. 1) (z.B. Verschmelzkoppler, Anschliffkoppler usw.) oder geeignete optische Filter mit richtungstrennender/richtungskoppelnder Wirkung oder Kombinationen hiervon.

In der Zentrale 1 befindet sich ein nicht gezeigter Wellenlängendemultiplexer, der das empfangene Wellenlängenmultiplexsignal in die darin enthaltenen teilnehmerindividuellen optischen Signale auflöst und diese teilnehmerindividuellen optischen Empfängern zuführt.

Das Ausführungsbeispiel nach Fig. 2 unterscheidet sich vom Ausführungsbeispiel nach Fig. 1 lediglich hinsichtlich der Auskopplung der Signale aus dem gemeinsamen Lichtwellenleiter 4 und der Einkopplung der teilnehmerindividuellen Signale in diesen Lichtwellenleiter 4. Hierzu ist gemäß Fig. 2 ein einziges konzentriertes optisches Bauelement, ein Sternkoppler 2, vorgesehen, der in Abwärtsrichtung das von der Zentrale gesendete optische Signal mit der Wellenlänge $\lambda_0$ auf die teilnehmerindividuellen Lichtwellenleiter 5a bis 5n verteilt und in Aufwärtsrichtung die von den Teilnehmern 3a bis 3n gesendeten optischen Signale mit den teilnehmerindividuellen Wellenlänge $\lambda_1$ bis $\lambda_n$ zu einem Wellenlängenmultiplex-Signal zusammensetzt. Der Sternkoppler 2 ist als eine konzentrierte Vorfeldeinrichtung aufzufassen, die sich in der Nähe der Teilnehmer 3a bis 3n befindet, wogegen die Koppler 2a bis 2n in Fig. 1 als eine verteilte Vorfeldeinrichtung zu betrachten sind. Ein Sternkoppler kann entweder so aufgebaut sein, daß eine Vielzahl von Lichtwellenleitern an einer einzigen Zone zusammengeschmolzen sind (Fig. 2) oder so, daß jeweils zwei so zusammengeschmolzen sind, daß sich in Stufen eine binäre Baumstruktur ergibt.

Der Sternkoppler 2 sorgt dafür, daß in Aufwärtsrichtung zu sendende optische Signale nicht in Abwärtsrichtung zu einem anderen Teilnehmer reflektiert werden.

Die Vorteile des erfindungsgemäßen Systems sind darin zu sehen, daß in der Zentrale nur eine einziger optischer Sender vorhanden ist, daß bei den Teilnehmern einheitliche Empfänger vorhanden sind und daß die Koppler 2a bis 2n oder der Sternkoppler 2 einfach aufgebaut sind. Je nach der geographischen Lage der an die Zentrale anzuschließenden Gruppe von Teilnehmern wird die verteilte Vorfeldeinrichtung nach Fig. 1 oder die konzentrierte Vorfeldeinrichtung nach Fig. 2 günstiger sein.

Bei beiden Ausführungsbeispielen nach Fig. 1 und Fig. 2 sind sowohl der gemeinsame Lichtwellenleiter 4 als auch die teilnehmerindividuellen Lichtwellenleiter 5a bis 5n jeweils für die Übertragung in beiden Übertragungsrichtungen verwendet. Es gibt aber auch noch folgende andere Möglichkeiten, das erfindungsgemäße Prinzip zu realisieren.

Die erste Möglichkeit besteht darin, für die Übertragung in den beiden Richtungen völlig getrennte Systeme zu verwenden, d. h. einen ersten gemeinsamen Lichtwellenleiter für die Übertragung in Abwätsrichtung, in den entsprechend Fig. 1 einzelne Koppler, die jeweils zu einem Teilnehmer gehören, eingefügt sind, die das optische Signal mit der Wellenlänge $\lambda_n$ vom gemeinsamen Lichtwellenleiter auf teilnehmerindividuelle Lichtwellenleiter auskoppeln, die jeweils mit dem Empfänger eines Teilnehmers verbunden sind. Für die Übertragung der Signale mit den teilnehmerindividuellen Wellenlängen $\lambda_1$ bis $\lambda_n$ in Aufwärtsrichtung sind in diesem Falle separate jeweils mit dem Ausgang des optischen Senders eines Teilnehmers verbundene Lichtwellenleiter vorgesehen, die jeweils über einen dem Teilnehmer zugehörigen Koppler an einen zweiten gemeinsamen Lichtwellenleiter für die Übertragung in Aufwartsrichtung angeschlossen sind. In entsprechender Weise können die Lichtwellenleiter gemäß Fig. 2 und der Sternkoppler auch für die Übertragung in den beiden Richtungen doppelt vorhanden sein.

Die zweite Möglichkeit besteht darin, daß ein einziger gemeinsamer Lichtwellenleiter für die Übertragung in beiden Richtungen vorgesehen ist, an den jedoch jeder Teilnehmer über zwei teilnehmerindividuelle Lichtwellenleiter und jeweils einen in dem gemeinsamen Lichtwellenleiter eingefügten Koppler angeschlossen sind. Dabei dient der eine Koppler zur Auskopplung, d.h. Verteilung, des von der Zentral in Abwärtsrichtung gesendeten optischen Signals mit der Wellenlänge $\lambda_0$ zum Teilnehmer und der andere Koppler zum Einkoppeln des teilnehmerindividuellen Signals mit det teilnehmerindividuellen Lichtwellenlänge, das der optische Sender des Teilnehmers über einen teilnehmerindividuellen Sende-Lichtwellenleiter zum gemeinsamen Lichtwellenleiter sendet. Dabei muß dafür gesorgt sein, daß das vom Sender eines Teilnehmers gesendete Signal nicht auf den Empfänger desselben Teilnehmers und nicht auf die Empfänger der übrigen Teilnehmer gelangt. In entsprechender Weise kann auch die Anordnung nach Fig. 2 so ausgestaltet sein, daß die Übertragung zwischen der Zentrale 1 und dem Sternkoppler 2 in beiden Richtungen über einen einzigen Lichtwellenleiter erfolgt, jedoch an den Sternkoppler der Sender und Empfänger eines Teilnehmers über zwei separate Teilnehmer-Lichtwellenleiter für die zwei Übertragungseinrichtungen angeschlossen ist. Dies kann beispielsweise so geschehen, daß ein erster Sternkoppler die teilnehmerindividuellen optischen Signale mit den teilnehmerindividuellen Wellenlängen, die die Sender der Teilnehmer zur Vorfeldeinrichtung senden, zu einem Wellenlängenmultiplex-Signal zusammenfasst, daß außerdem in der Vorfeldeinrichtung ein Richtungskoppler vorhanden ist, der dieses Wellenlängenmultiplex-Signal in den gemeinsamen Lichtwellenleiter einkoppelt und das von der Zentrale in Abwärtsrichtung gesendete optische Signal aus dem gemeinsamen Lichtwellenleiter auskoppelt auf einem zweiten Sternkoppler, der es über teilnehmerindividuelle Empfangs-Lichtwellenleiter auf die Empfänger der Teilnehmer verteilt.

Eine dritte Möglichkeit besteht darin, daß zwei gemeinsame Lichtwellenleiter für die beiden Übertragungsrichtungen vorhanden sind, daß zwischen einem Teilnehmer und einem Kopplungspunkt an diesen beiden Lichtwellenleitern ein einziger teilnehmerindividueller Lichtwellenleiter zur Übertragung in beiden Richtungen verläuft und daß dieser teilnehmerindividuelle Lichtwellenleiter über einen optischen Richtungskoppler an einen in den Abwärts-Lichtwellenleiter eingefügten Koppler zum Auskoppeln des in Abwärtsrichtung übertragenen optischen Signals und an einen in den Aufwärts-Lichtwellenleiter eingefügten Koppler zum Einkoppeln des vom Teilnehmer gesendeten teilnehmerindividuellen Signals in diesen Aufwärts-Lichtwellenleiter angeschlossen ist. In entsprechender Weise kann beim Beispiel mit einer konzentrierten Vorfeldeinrichtung nach Fig. 2 ein für beide Übertragungsrichtungen verwendeter teilnehmerindividueller Lichtwellenleiter über einen Richtungskoppler an einen ersten Sternkoppler angeschlossen werden, der die in Aufwärtsrichtung zu sendenden teilnehmerindividuellen optischen Signale zu einem Wellenlängenmultiplex-Signal zusammenfaßt und in den Aufwärts-Lichtwellenleiter einkoppelt, und an einen zweiten Sternkoppler, der das über den Abwärts-Lichtwellenleiter gesendete optische Signal auf die Gruppe von Teilnehmern verteilt.

Bei allen diesen Beispielen ist das Prinzip verwendet, daß die in Abwärtsrichtung zu übertragenden teilnehmerindividuellen Signale im Zeitmultiplex zusammengefaßt und die in Aufwärtsrichtung zu übertragenden Signale im Wellenlängenmultiplex zusammengefaßt werden.

## Ansprüche

1. Optisches Nachrichtenübertragungssystem zur doppeltgerichteten Übertragung von teilnehmerindividuellen Nachrichten zwischen einer Zentrale (1) und mehreren Teilnehmern (3a bis 3n),
   - bei dem die Übertragung der teilnehmerindividuellen Nachrichtensignale entweder in beiden Richtungen über einen einzigen Lichtwellenleiter (4) oder in jeweils einer Richtung über verschiedene Lichtwellenleiter erfolgt,
   - bei dem die Teilnehmer zu Gruppen zusammengefaßt sind,
   - bei dem die Zentrale (1) Mittel enthält, um die von ihr zu einer Gruppe von Teilnehmern (3a bis 3n) zu übertragenden teilnehmerindividuellen Signale zu einem elektrischen Zeitmultiplexsignal zusammenzufassen und als optisches Signal mit einer einzigen Wellenlänge ($\lambda_0$) über einen der Gruppe von Teilnehmern (3a bis 3n) gemeinsamen Lichtwellenleiter (4) in die Nähe dieser Teilnehmer zu übertragen,
   - bei dem passive optische Mittel (2a bis 2n; 2) und teilnehmerindividuelle Lichtwellenleiter (5a bis 5n) vorhanden sind, die das optische Signal zu den Teilnehmern (3a bis 3n) verteilen,
   - bei dem jeder Teilnehmer einen Empfänger (E) hat, der das empfangene optische Signal in das elektrische Zeitmultiplexsignal umsetzt und aus diesem nur das für den Teilnehmer bestimmte Signal entnimmt,
   **dadurch gekennzeichnet,**
   - daß jeder Teilnehmer aus der Gruppe von Teilnehmern (3a bis 3n) einen optischen Sender (S) hat, um die zur Zentrale (1) zu übertragenden teilnehmerindividuellen Nachrichtensignale als optische Signale mit teilnehmerindividuellen Wellenlängen ($\lambda_1$ bis $\lambda_n$) zunächst über teilnehmerindividuelle Lichtwellenleiter (5a bis 5n) zu einem gemeinsamen Lichtwellenleiter (4) zu übertragen, und
   - daß dort passive optische Mittel (2a bis 2n; 2) vorhanden sind, die die optischen Signale in den gemeinsamen Lichtwellenleiter (4) einkoppeln, der sie im Wellenlängenmultiplex zur Zentrale (1) überträgt.

2. System nach Anspruch 1, dadurch gekennzeichnet, daß die passiven optischen Mittel zum Verteilen des von der Zentrale (1) gesendeten optischen Signals mit der einzigen Wellenlänge ($\lambda_0$) auf die Teilnehmer (3a bis 3n) und zum Einkoppeln der von den Teilnehmern (3a bis 3n) gesendeten optischen Signale mit den teilnehmerindividuellen Wellenlängen ($\lambda_1$ bis $\lambda_n$) in den den Teilnehmern (3a bis 3n) gemeinsamen Lichtwellenleiter (4) passive optische Koppler (2a bis 2n) sind, die jeweils zu einem Teilnehmer (3a bis 3n) gehören und in seiner Nähe in den den Teilnehmern (3a bis 3n) gemeinsamen Lichtwellenleiter (4) eingefügt sind (Fig. 1).

3. System nach Anspruch 1, dadurch gekennzeichnet, daß die passiven optischen Mittel zum Verteilen des von der Zentrale (1) gesendeten optischen Signals mit der einzigen Wellenlänge ($\lambda_0$) auf die Teilnehmer (3a bis 3n) und zum Einkoppeln der von den Teilnehmern (3a bis 3n) gesendeten optischen Signale mit den teilnehmerindividuellen Wellenlängen ($\lambda_1$ bis $\lambda_n$) in den den Teilnehmern (3a bis 3n) gemeinsamen Lichtwellenleiter (4) aus einem konzentrierten passiven Sternkoppler (2) bestehen (Fig. 2).

4. System nach einem der Ansprüche 1 bis 3, dadurch gekennzeichnet, daß derselbe gemeinsame Lichtwellenleiter (4) und/oder dieselben teilnehmerindividuellen Lichtwellenleiter (5a bis 5n) für die Übertragung in beiden Richtungen verwendet sind.

5. System nach Anspruch 4, wobei für jeden Teilnehmer (3a bis 3n) der teilnehmerindividuelle Lichtwellenleiter (5a bis 5n) zur Übertragung in beiden Richtungen verwendet ist, dadurch gekennzeichnet, daß der optische Sender (32a bis 32n) und der optische Empfänger des Teilnehmers (31a bis 31n) mittels eines optischen Richtungskopplers (33a bis 33n) an diesen teilnehmerindividuellen Lichtwellenleiter (5a bis 5n) angeschlossen sind.

## Claims

1. Optical communication system for transmitting subscriber-assigned information signals in both directions between a center (1) and a plurality of subscribers (3a to 3n),
   - wherein the transmission of the subscriber-assigned information signals takes place either over a single optical optical waveguide (4) for both directions or over separate optical waveguides, one for each direction,
   - wherein the subscribers are arranged in groups,

- wherein the center (1) includes means for combining the subscriber-assigned signals to be transmitted from the center (1) to a group of subscribers (3a to 3n) into an electric time-division-multiplex signal and for transmitting said electric time-division-multiplex signal as an optical signal having a single wavelength ($\lambda_0$) over an optical waveguide (4) common to the group of subscribers (3a to 3n) to the vicinity of said subscribers,

- wherein passive optical means (2a to 2n; 2) and subscriber-assigned optical waveguides (5a to 5n) are provided for distributing the optical signal to the subscribers (3a to 3n), and

- wherein each of the subscribers has a receiver (E) which converts the received optical signal into the electric time-division-multiplex signal and extracts from the latter only the signal intended for said subscriber,
  **characterized in**

- that each subscriber of the group of subscribers (3a to 3n) has an optical transmitter (S) whereby the subscriber-assigned information signals to be transmitted to the center (1) are first transmitted as optical signals having subscriber-assigned wavelengths ($\lambda_1$ to $\lambda_n$) over subscriber-assigned optical waveguides (5a to 5n) to a common optical waveguide (4), and

- that passive optical means (2a to 2n; 2) are present there which couple the optical signals into the common optical waveguide (4), which transmits them to the center (1) using wavelength-division multiplexing.

2. A system as claimed in claim 1, characterized in that the passive optical means for distributing the signal having the single wavelength ($\lambda_0$) which is transmitted by the center (1), to the subscribers (3a to 3n) and for coupling the optical signals having the subscriber-assigned wavelengths ($\lambda_1$ to $\lambda n$), which are transmitted by the subscribers (3a to 3n), into the optical waveguide (4) common to the subscribers (3a to 3n) are passive optical couplers (2a to 2n) each of which is associated with one of the subscribers (3a to 3n) and is inserted in the common optical waveguide (4) at a location in the vicinity of said subscriber (Fig. 1).

3. A system as claimed in claim 1, characterized in that the passive optical means for distributing the optical signal having the single wavelength ($\lambda_0$), which is transmitted by the center (1), to the subscribers (3a to 3n) and for coupling the optical signals having the subscriber-assigned wavelengths ($\lambda_1$ to $\lambda_n$), which are transmitted by the subscribers (3a to 3n), into the optical waveguide (4) common to the subscribers (3a to 3n) are formed by a lumped passive star coupler (2) (Fig. 2).

4. A system as claimed in any one of claims 1 to 3, characterized in that the same common optical waveguide (4) and/or the same subscriber-assigned optical waveguides (5a to 5n) are used for transmission in both directions.

5. A system as claimed in claim 4 wherein for each subscriber (3a to 3n), the subscriber-assigned optical waveguide (5a to 5n) is used for transmission in both directions, characterized in that the optical transmitter (32a to 32n) and the optical receiver (31a to 31n) of the subscriber are connected to said subscriber-assigned optical waveguide (5a to 5n) by means of an optical directional coupler (33a to 33n).

**Revendications**

1. Système optique de transmission d'information pour la transmission bidirectionnelle d'informations d'abonnés individuels entre une centrale (1) et plusieurs abonnés (3a--≫3n),
   - selon lequel la transmission des signaux d'information d'abonnés individuels est effectuée dans les deux sens par l'intermédiaire d'un guide unique d'onde lumineuse (4) ou en un sens sur plusieurs guides d'onde lumineuse (4),
   - selon lequel les abonnés sont en groupes,
   - selon lequel la centrale (1) prévoit des moyens permettant de grouper sous forme de signal multiplex de durée ses signaux individuels d'abonnés à transmettre à un groupe d'abonnés (3a--3n), et de les transmettre sous forme de signal optique ayant une seule longueur d'onde ( $_0$) par un guide en commun d'onde lumineuse (4) d'abonné du groupe d'abonnés (3a--≫3n) à proximité de l'abonné,
   - selon lequel des moyens passifs (2a--≫2n; 2) et des guides individuels d'abonnés d'onde lumineuse (5a--≫5b) sont prévus pour distribuer le signal optique aux abonnés (3a--≫3n),

- selon lequel chaque abonné a un récepteur (E), qui transforme le signal optique reçu en signal multiplex électrique de durée et n'en prélève que le signal destiné à l'abonné,

**caractérisé en ce que,**

- chaque abonné du groupe d'abonnés (3a--≫3n) a un émetteur optique (S), pour transmettre les signaux d'information individuels d'abonnés à la centrale (1) sous forme de signaux optiques de longueur d'onde individuelles aux abonnés (3a--≫3n)en premier lieu par un guide individuel d'abonné d'onde lumineuse (5a--≫5n) à un câble guide d'onde lumineuse (4), et

- selon lequel des moyens optiques passifs (2a--≫2n) y sont prévus, pour coupler les signaux optiques aux guides en commun d'onde lumineuse transmis au multiplex de longueur d'onde de la centrale (1).

2. Système selon la Revendication 1, caractérisé en ce que, les moyens optiques passifs de distribution du signal optique transmis à partir de la centrale (1) sont prévus aux seules longueurs d'onde aux abonnés (3a--≫3n) et pour coupler les signaux optiques transmis par les abonnés (3a--≫3n) avec les longueurs d'onde individuelles d'abonnés auxquelles les coupleurs optiques passifs (2a--≫2n) sont prévus pour les guides en commun d'onde lumineuse (4) d'abonnés, dont chacun est prévu pour un abonné (3a--≫3n) et installé à proximité des guides d'onde lumineuse (4) des abonnés (3a--≫3n).

3. Système selon la Revendication 1, caractérisé en ce que, les moyens optiques passifs de distribution du signal optique transmis par la centrale (1) à la longueur d'onde unique aux abonnés (3a--≫3n) et pour coupler des signaux optiques transmis par les abonnés (3a--≫ 3n) avec les longueurs d'onde individuelles d'abonnés (3a--≫3n) dont les guides en commun d'onde lumineuse (4) d'abonnés consistent d'un coupleur-étoile (2) passif concentré (Fig.2).

4. Système selon les Revendications 1 à 3, caractérisé en ce que, le même guide d'onde lumineuse et/ou les guides individuels d'abonnés (5a--≫5n) sont exploités pour la transmission dans les deux sens.

5. Système selon la Revendications 4, caractérisé en ce que, pour chaque abonné (3a--≫3n) le guide individuel d'abonné d'onde lumineuse (5a--5n) est utilisé pour la transmission dans les deux sens, caractérisé en ce que, l'émetteur optique (32a--≫32n) et le récepteur optique d'abonné (31a--≫31n) est raccordé au moyen d'un coupleur optique directionnel à ce guide individuel d'abonné d'onde lumineuse (5a--5n).

Fig.1

Fig.2